(19) Europäisches Patentamt
European Patent Office
Office européen des brevets

(11) **EP 4 462 371 A1**

(12) **EUROPEAN PATENT APPLICATION**
published in accordance with Art. 153(4) EPC

(43) Date of publication:
**13.11.2024 Bulletin 2024/46**

(51) International Patent Classification (IPC):
**G06T 19/00** (2011.01)

(21) Application number: **23806656.7**

(86) International application number:
**PCT/CN2023/088339**

(22) Date of filing: **14.04.2023**

(87) International publication number:
**WO 2023/221701 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.05.2022 CN 202210529330**

(71) Applicant: **Beijing Volcano Engine Technology Co., Ltd.**
**Beijing 100190 (CN)**

(72) Inventors:
• **SUN, Yang**
  **Beijing 100028 (CN)**
• **XIE, Yifan**
  **Beijing 100028 (CN)**
• **LIU, Kang**
  **Beijing 100028 (CN)**
• **LUO, Xuan**
  **Beijing 100028 (CN)**

(74) Representative: **Dentons UK and Middle East LLP**
**One Fleet Place**
**London EC4M 7WS (GB)**

(54) **MULTIVARIABLE TIME SEQUENCE PROCESSING METHOD AND APPARATUS, DEVICE AND MEDIUM**

(57) Disclosed in the present application is a multivariable time sequence processing method, comprising: obtaining a time sequence set for mining a causal relationship between variables in a multivariable time sequence, the time sequence set comprising a plurality of first time sequence fragments, wherein each first time sequence fragment has the same length and is a multivariable time sequence; for any first time sequence fragment, inputting the first time sequence fragment into a graph neural network, and predicting a multivariable parameter value corresponding to the first moment, wherein the first moment is the next moment adjacent to the latest moment in the first time sequence fragment; determining an optimization function on the basis of multivariable parameter values corresponding to a plurality of first moments and multivariable sequence tags (true values) corresponding to the plurality of first moments, the optimization function comprising a loss function and a causal matrix of the graph neural network; determining a value of each parameter in the causal matrix by taking minimization of the optimization function as a target; and determining the causal relationship among a plurality of variables according to the value of each parameter.

Obtain a time series set comprising a plurality of first time series segments, each of the plurality of first time series segments having a same length — S201

For each of the first time series segments in the time series set, input the first time series segment into a graph neural network to predict a multivariable reference value corresponding to a first time point that is a next time point adjacent to a latest time point in the first time series segment — S202

Determine an optimization function based on multivariable reference values corresponding to a plurality of the first time points and multivariable series tags corresponding to the plurality of the first time points, the optimization function comprising a loss function and a causal matrix — S203

Determine values of respective parameters in the causal matrix with an objective of minimizing the optimization function — S204

Determine, based on the values of the respective parameters in the causal matrix, a causal relationship between multiple variables in the multivariable time series — S205

Fig. 2

**Description**

The present disclosure claims the priority from the CN patent application No. 202210529330.4 entitled "Multivariable time series processing method and apparatus, device and medium" filed on May 16, 2022, the disclosure of which is incorporated herein by reference in its entirety.

**FIELD**

Embodiments of the present disclosure generally relate to the field of computers, and more specifically, to a multivariable time series processing method and apparatus, a device and a medium.

**BACKGROUND**

A time series is a sequence of numerical values of a specific statistical indicator arranged in chronological order. Time series data is commonly categorized into single-variable and multivariable time series. In a multivariable time series, multiple values of a statistical indicator coexist at the same time point. Research on multivariable time series mainly focuses on prediction, anomaly detection, causal mining, and similar analyses. Causal mining specifically involves identifying influence relationships between multiple variables.

Nowadays, analysis of the multivariable time series mainly focuses on multiple variables having a simple linear relationship which, however, cannot handle the multivariable time series with nonlinear dependencies.

**SUMMARY**

In view of the above, the present disclosure provides a multivariable time series processing method and apparatus, a device and a medium, to process a multivariable time series with a nonlinear dependency.

To fulfil the above objective, the technical solutions are provided by the present disclosure.

In the first aspect of the present disclosure, there is provided a multivariable time series processing method, comprising: obtaining a time series set comprising a plurality of first time series segments, each of the plurality of first time series segments having a same length and being a multivariable time series; for each of the first time series segments in the time series set, inputting the first time series segment into a graph neural network to predict a multivariable reference value corresponding to a first time point that is a next time point adjacent to a latest time point in the first time series segment; determining an optimization function based on multivariable reference values corresponding to a plurality of the first time points and multivariable series tags corresponding to the plurality of the first time points, the optimization function comprising a loss function and a causal matrix of the graph neural network; determining values of respective parameters in the causal matrix with an objective of minimizing the optimization function; and determining, based on the values of the respective parameters in the causal matrix, a causal relationship between multiple variables in the multivariable time series.

In a second aspect of the present application, there is provided a multivariable time series processing apparatus, comprising: an obtaining unit for obtaining a time series set comprising a plurality of first time series segments, each of the plurality of first time series segments having a same length and being a multivariable time series; an predicting unit for inputting, for each of the first time series segments in the time series set, the first time series segment into a graph neural network, to predict a multivariable reference value corresponding to a first time point that is a next time point adjacent to a latest time point in the first time series segment; a determining unit for determining an optimization function based on multivariable reference values corresponding to a plurality of the first time points and multivariable series tags corresponding to the plurality of the first time points, the optimization function comprising a loss function and a causal matrix of the graph neural network; the determining unit further for determining values of respective parameters in the causal matrix, with an objective of minimizing the optimization function; and the determining unit further for determining, based on the values of the respective parameters in the causal matrix, a causal relationship between multiple variables in the multivariable time series.

In a third aspect of the present disclosure, there is provided an electronic device, comprising: a memory for storing instructions or a computer program; and a processor for executing the instructions or the computer program in the memory to cause the electronic device to perform the method of the first aspect.

In a fourth aspect of the present disclosure, there is provided a computer readable storage medium having instructions stored thereon which, when running on a device, cause the device to perform the method of the first aspect.

In a fifth aspect of the present disclosure, there is provided a computer program product comprising computer programs/instructions that implement the method of the first aspect when executed by a processor.

Therefore, the embodiments of the present application may achieve the following advantageous effects. In the present disclosure, in order to mine a causal relationship between variables in a multivariable time series, a time series set is obtained, which includes a plurality of first time series segments. Each of the plurality of first time series segments has a same length and is a multivariable time series. For each of the first time series segments in the time series set, the first time series segment is input into a graph neural network to predict a multivariable reference value corresponding to a first time point that is a next time point adjacent to a latest time point in the first time series segment. That is, the reference value of each variable of the first time series segment is used to predict a reference value of each variable at the next time point. An optimization function is determined based on multivariable reference values corresponding to a plurality of the first time points and multivariable series tags (true values) corresponding to the plurality of the first time points, the optimization function comprising a loss function and a causal matrix of the graph neural network. Values of respective parameters in the causal matrix are determined with an objective of minimizing the optimization function, and a causal relationship between multiple variables in the multivariable time series is determined based on the values of the respective parameters in the causal matrix.

**BRIEF DESCRIPTION OF THE DRAWINGS**

In order to describe more clearly the technical solution according to the embodiments of the present disclosure or the prior art, brief description of the drawings required in the respective embodiments or the prior art will be provided below. Obviously, the drawings below only illustrate some embodiments of the present disclosure, on the basis of which the ordinary skilled in the art could derive other related drawings, without doing creative work.

Fig. 1 illustrates a schematic diagram of a time series provided by embodiments of the present disclosure;

Fig. 2 illustrates a flowchart of a multivariable time series processing method provided by embodiments of the present disclosure;

Fig. 3a illustrates a schematic diagram of a manner of obtaining a first time series segment provided by embodiments of the present disclosure;

Fig. 3b illustrates a schematic diagram of a further manner of obtaining a first time series segment provided by embodiments of the present disclosure;

Fig. 4 illustrates a schematic diagram of a structure of a graph neural network provided by embodiments of the present disclosure;

Fig. 5 illustrates a flowchart of a further multivariable time series processing method provided by embodiments of the present disclosure;

Fig. 6 illustrates a schematic diagram of a manner of obtaining a second time series segment provided by embodiments of the present disclosure;

Fig. 7 illustrates a schematic diagram of a multivariable time series processing apparatus provided by embodiments of the present disclosure; and

Fig. 8 illustrates a schematic diagram of an electronic device provided by embodiments of the present disclosure.

**DETAILED DESCRIPTION OF EMBODIMENTS**

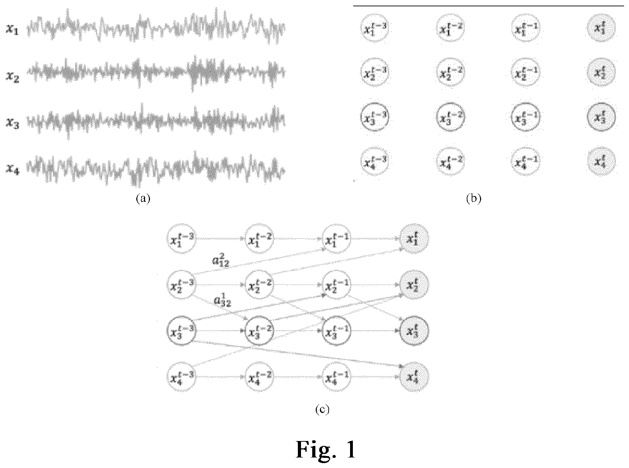

With reference to the drawings of the present disclosure, the technical solution according to embodiments of the present disclosure will be described below clearly and completely, to enable those skilled in the art to fully understand the technical solution of the present disclosure. Apparently, the embodiments described herein are only part of the embodiments of the present disclosure, rather than all of them. On the basis of the embodiments described herein, those skilled in the art could derive other embodiments, without doing creative work, which all fall into the protection scope of the present disclosure.
In order to solve the problem of causal inference between variables in a time series, embodiments of the present disclosure provide a method of mining a causal structure based on a graph neural network, to analyze the time lag effect between variables by mining the causal relationship between the respective variables in the time series.
For ease of understanding, Fig. 1 illustrates a diagram of an application scenario. As shown therein, in the application scenario, the time series includes 4 variables, namely x1, x2, x3 and x4, wherein (a) represents a normal time series, (b) represents a discretized time series, and (c) represents a directed graph obtained by mining. Factors impacting $X_1^t$, $X_2^t$, $X_3^t$ and $X_4^t$ can be determined through the directed graph (c).

With the technical solution, the present disclosure can mine the causal relationship between a plurality of variables, and can further determine a degree of impact and a maximum time lag value, for example, values of respective edges in Fig. (c). For example, variables impacting $X_1^t$ include $X_1^{t-1}$, and $X_2^{t-2}$, and the maximum time lag value is 2. Variables impacting $X_2^t$ include $X_2^{t-1}$, $X_3^{t-1}$, and $X_3^{t-2}$, and the maximum time lag value is 2.

It is worth noting that the synchronic effect between the variables are not taken into account herein. For example, the mutual impact among $X_1^t$, $X_2^t$, $X_3^t$ and $X_4^t$ are not considered.

Based on the above scenario, reference now will be made to the drawings to describe the multivariable time series processing method provided by the embodiments of the present disclosure.

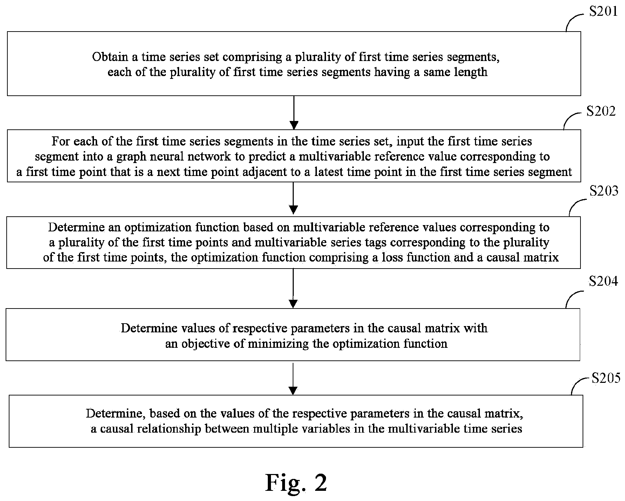

Fig. 2 illustrates a flowchart of a multivariable time series processing method provided by embodiments of the present disclosure. The method may be performed by a processing device. The processing device may be a server, an electronic device, or others, which is not limited herein. The server may be a device with storage and computing functions, for example, a cloud server, a server cluster, or the like. The electronic device may include a device with a communications function such as a mobile telephone, a tablet, a desktop computer, a notebook computer, an on-vehicle terminal, a wearable electronic device, an all-in-one computer, a smart home device, or the like, or may be a device simulated by a virtual machine or an emulator. As shown therein, the method may include the following steps.

The method includes, at S201, obtaining a time series set comprising a plurality of first time series segments.

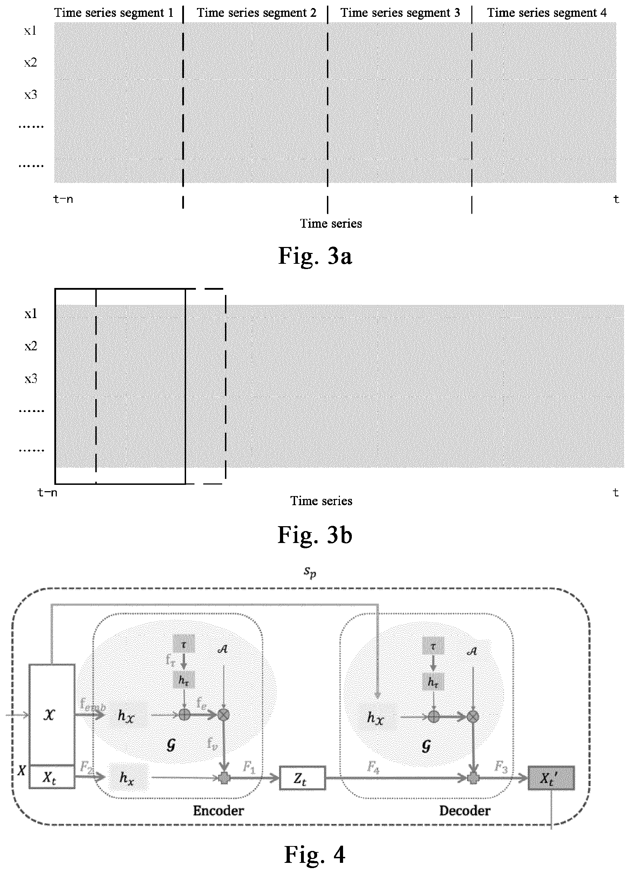

In the embodiments, after obtaining a time series, the time series can be divided according to a preset duration to obtain a plurality of first time series segments. Wherein, each of the plurality of first time series segments has a same length and is a multivariable time series. For example, as shown in Fig. 3a, the time series from the time point t-n to the time point n is obtained, which includes variables x1, x2, x3 ... by which the time series is divided equidistantly into a time series segment 1, a time series segment 2, a time series segment 3, and a time series segment 4. Wherein, the preset duration can be set according to the actual application, which is not limited herein.

Alternatively, an observation window is preset, and by sliding the observation window, a plurality of first time series segments is obtained. Specifically, an observation window and a sliding step are obtained, and the observation window is then slid on the time series according to the sliding step, to obtain a plurality of first time series segments. Wherein, the length of the observation window and the sliding step can be determined according to the actual application. For example, the observation window is So=3, and the sliding step is 1. As shown in Fig. 3b, the observation window indicated by solid lines is a divided first time series segment, and if it is moved rightwards a preset sliding step, an observation window indicated by dashed lines is obtained which is a further first time series segment.

It is worth noting that, the length of the observation window is greater than or equal to an estimated maximum time lag value. For example, the estimated maximum time lag value is 3 (i.e., the variable at the time point t-3 impacts the variable at the time point t), the observation window has a length of at least 3.

The method further includes, at S202, for each of the first time series segments in the time series set, inputting the first time series segment into a graph neural network to predict a multivariable reference value corresponding to a first time point.

After obtaining the time series set, for each of the first time series segments in the time series set, the first time series segment is input into a graph neural network, to predict a multivariable reference value corresponding to a first time point. Wherein, the first time point is a next time point adjacent to a latest time point in the first time series segment. For example, if the duration corresponding to the first time series segment lasts from t-n to t-n-5, the first time point is t-n-6. The time series segment in the duration from t-n to t-n-5 is used to predict a reference value of each variable at a next time point. Then, the reference value of each variable corresponding to the next time point of each first time series segment can be predicted by the graph neural network.

Specifically, to mine a causal relationship between the respective variables in the time series, a structural causal mode is built in the embodiments, which can be expressed as follows:

$$X_t = \sum_\tau A_\tau X_{t-\tau} + Z_t \qquad (1)$$

wherein $X_{t-\tau}$ is a first time series segment, and $A_\tau$ is a causal matrix that includes impact factors among the respective variables. For example, the causal matrix includes $a_{12}^2$ and $a_{32}^1$ in Fig. 1(c). Zt is noise corresponding to each variable at the time point t, and $\tau$=1, ..., p, where p is the maximum time lag value. For example, p=3 in Fig. 1.

Specifically, through integration, the above formula (1) can be expressed as follows:

$$X_t = \mathcal{A}\mathcal{X} + Z_t \qquad (2)$$

where $\mathcal{X} = [X_{t-1}^T | \cdots | X_{t-p}^T]^T$, and $\mathcal{A} = [A_1 | \cdots | A_p]$.

Specifically, the general form is provided below:

$$X_t = f_{\mathcal{A}}(\mathcal{X}, Z_t) \qquad (3)$$

wherein $\mathcal{A}$ is to be solved. If a certain element thereof is non-zero, it is indicated that an impact relationship with a specific time lag value exists between corresponding variables.

Alternatively, the multivariable reference values corresponding to the first time point can be predicted in the following manner: inputting the first time series segment and a multivariable series tag corresponding to the first time point into an encoder of the graph neural network, to obtain noise features corresponding to respective variables and predicted features of respective variables of the first time point; and inputting the predicted features of the respective variables of the first time point and the noise features corresponding to the respective variables into a decoder of the graph neural network, to obtain the multivariable reference value corresponding to the first time point. Wherein, the multivariable series tag of the first time point refers to a true series value corresponding to the respective variables of the first time point.

The structure of graph neural network as shown in Fig. 4 includes a node embedding (NE) module, an edge neural network (ENN), and a node neural network (NNN). Wherein, the NE maps node information to a feature space using a multilayer perceptron (MLP); the ENN encodes the causal relationship represented by the edges and the time lag information as edge features, splices the same with node features, and performs dot multiplication with $\mathcal{A}$ to update the edge features; the NNN transmits the edge features to a next node through an aggregation function.

The expression corresponding to the NE is provided below:

$$h_{it} = f_{emb}(x_{it}) \qquad (4)$$

The expression corresponding to the ENN is provided below:

$$h_{(it,jt')}^l = A_{ij}^\tau f_e^l([h_{it}^l, f_\tau(\tau)]) \qquad (5)$$

The expression corresponding to the NNN is provided below:

$$h_{it}^{l+1} = f_v^l(\sum h_{(it,jt')}^l) \qquad (6)$$

Wherein, $x$ is an original node feature, $h$ is embedding of a node or edge, $f_{emb}$ and $f_\tau$ are the MLP, $fe$ and $fv$ are MLP layer or identity mapping, or the like, and $l$ is a number of iterations. Wherein, the computing result of $fv$ is equivalent to $\mathcal{A}\mathcal{X}$ in the above formula (2).

Wherein, the output result of the encoder is: Zt= F1 (F2 ($X_t$) - G (X)).

The corresponding output result of the decoder is: $X_t^{'}$ = F3 (G (X) + F4 (Zt)).

From Fig. 4, it could be learned that the input of the model is X+Xt, where X is the first time series segment, and Xt is a true series value corresponding to the first time point and used for determining noise Zt. The output of the model is $X_t^{'}$ indicating a predicted reference value of each variable at the first time point.

The method further includes, at S203, determining an optimization function based on multivariable reference values corresponding to a plurality of the first time points and multivariable series tags corresponding to the plurality of the first time points.

After the multivariable reference value corresponding to the first time point is predicted based on each of the first time series segments, an optimization function is determined based on multivariable reference values corresponding to a plurality of the first time points and multivariable series tags corresponding to the plurality of the first time points, where the optimization function includes a loss function and a causal matrix of the graph neural network. The respective parameters in the causal matrix are used to reflect whether variables impact each other.

Specifically, the optimization function is expressed as follows:

$$\left[ -\frac{1}{n} \sum_n l_{\Phi,\mathcal{A}}(X) + \lambda \|\mathcal{A}\|_1 \right] \qquad (7)$$

wherein $l_{\Phi,\mathcal{A}}(X)$ is the loss function of the graph neural network, n is a number of samples input into the model (i.e., a number of the first time series segments in the time series set), and A is a sparsity coefficient.

The loss function of the graph neural network could be selected according to the actual application, for example, a mean squared error, a cross-entropy cost function, or the like.

The method further includes, at S204, determining values of respective parameters in the causal matrix with an objective of minimizing the optimization function.

After the optimization function is determined, the optimization function is solved with the objective of minimizing the optimization function, to thus determine values of the respective parameters in the causal mean.

Specifically, the formula (8) is provided below:

$$\min_{\Phi} \min_{\mathcal{A} \in \mathbb{R}^{m \times pm}} \left[ -\frac{1}{n} \sum_n l_{\Phi,\mathcal{A}}(X) + \lambda \|\mathcal{A}\|_1 \right] \qquad (8)$$

The method further includes, at S205: determining, based on the values of the respective parameters in the causal matrix, a causal relationship between multiple variables in the multivariable time series.

After the values of the respective parameters in the causal matrix are determined, a causal relationship between the multiple variables in the multivariable time series is determined based on the values of the respective parameters. Specifically, when a certain parameter is valued to zero, it is indicated that the variable corresponding to the parameter has no effect on the variable solved at the first moment. When a certain parameter is valued to non-zero, it is determined that the time lag causal relationship exists among multiple variables.

Alternatively, determining the causal relationship between the respective variables based on the values of the parameters in the causal matrix includes first determining whether a value of a parameter in the causal matrix is less than a preset threshold. If yes, the value of the parameter is set to 0. Specifically, a target parameter having a value less than a preset threshold in the causal matrix is determined; and the value of the target parameter is set to 0.

In order to mine a causal relationship between variables in a multivariable time series, a time series set is obtained which includes a plurality of first time series segments. Wherein, each of the plurality of first time series segments has a same length and is a multivariable time series. For each of the first time series segments in the time series set, the first time series segment is input into a graph neural network to predict a multivariable reference value corresponding to a first time point that is a next time point adjacent to a latest time point in the first time series segment. That is, the reference value of each variable of the first time series segment is used to predict a reference value of each variable at the next time point. An optimization function is determined based on multivariable reference values corresponding to a plurality of the first time points and multivariable series tags (true values) corresponding to the plurality of the first time points, the optimization function comprising a loss function and a causal matrix of the graph neural network. Values of respective parameters in the causal matrix are determined with an objective of minimizing the optimization function, and a causal relationship between multiple variables in the multivariable time series is determined based on the values of the respective parameters in the causal matrix.

From the embodiments described above, it could be learned that performing a prediction based on the first time series segment before determining the optimization function, and in order to further mine the causal relationship between the respective variables in the multivariable time series, multiple predictions can be performed for determining the optimization function based on the multiple prediction results. Hereinafter, an example where two predictions are performed is employed for illustration, i.e., the length of the prediction window is 2.

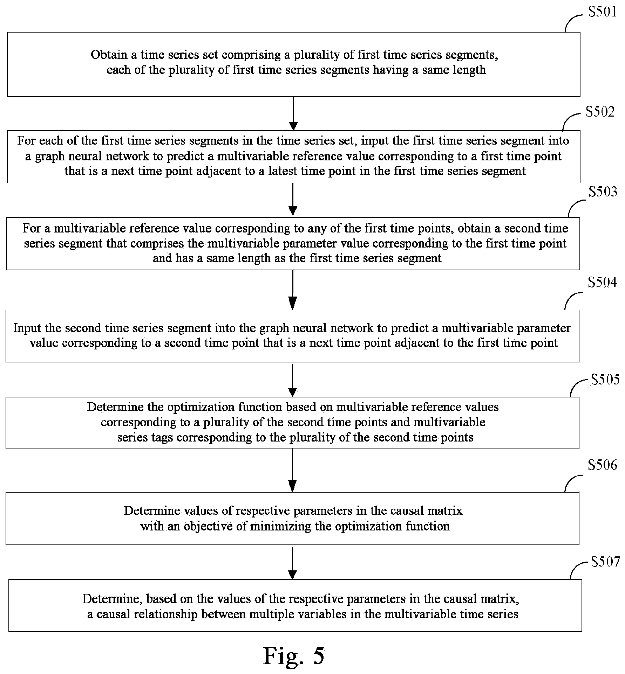

Fig. 5 illustrates a flowchart of a further multivariable time series processing method provided by embodiments of the present disclosure. As shown therein, the method includes:

The method includes, at S501, obtaining a time series set comprising a plurality of first time series segments. For details of S501, see the related description of S201, which are not limited here.

The method further includes, at S502, for each of the first time series segments in the time series set, inputting the first time series segment into a graph neural network to predict a multivariable reference value corresponding to a first time point. For details of S502, see the related description of S202, which are not limited here.

The method further includes, at S503, for a multivariable reference value corresponding to any of the first time points, obtaining a second time series segment.

In the embodiment, after the multivariable reference value corresponding to the first time point is predicted based on the first time series segment, the series corresponding to the earliest time point in the first time series segment is deleted while the predicted multivariable reference value corresponding to the first time point is added, to form a second time series segment. The second time series segment includes the multivariable parameter value corresponding to the first time point and has a same length as the first time series segment.

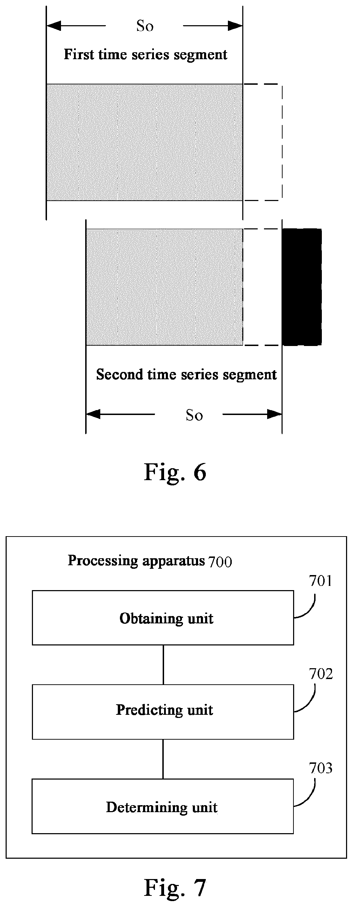

For example, Fig. 6 illustrates a schematic diagram of different time series segments, where the length of the first time series segment is So, and the white block is the multivariable reference value corresponding to the first time point predicted based on the first time series segment. The last (So-1) values in the first time series segment and the multivariable reference value corresponding to the first time point constitute a second time series segment.

The method further includes, at S504, inputting the second time series segment into the graph neural network to predict a multivariable parameter value corresponding to a second time point.

After the second time series segment is obtained, the second time series segment is input the graph neural network, to predict a multivariable reference value corresponding to a second time point. Wherein, the second time point is a next time point adjacent to the first time point.

Specifically, the second time series segment and a multivariable series tag corresponding to the second time point are input into an encoder of the graph neural network, to obtain noise features corresponding to respective variables and predicted features of respective variables of the first time point; and the predicted features of the respective variables of the second time point and the noise features corresponding to the respective variables are input into a decoder of the graph neural network, to obtain the multivariable reference value corresponding to the second time point. For the details of predicting the multivariable reference value corresponding to the second time point using the graph neural network, see the related description of S202.

For example, the black block in Fig. 6 is the multivariable reference value corresponding to the second time point obtained by performing prediction based on the second time series segment. It is worth noting that, when the number of predictions is increased, the last (So-1) values in the second time series segment and the multivariable reference value corresponding to the second time point constitute a third time series segment, and a multivariable reference value corresponding to a third time point is predicted based on the third time series segment. By analogy, multiple predictions can be implemented.

The method further includes, at S505, determining the optimization function based on multivariable reference values corresponding to a plurality of the second time points and multivariable series tags corresponding to the plurality of the second time points.

For each first time series segment, after the multivariable reference value corresponding to the second time point, the optimization function is determined based on multivariable reference values corresponding to a plurality of the second time points and multivariable series tags corresponding to the plurality of the second time points. Wherein, the optimization function includes a causal matrix, and a loss function determined based on the multivariable reference values corresponding to the second time points and the multivariable series tags corresponding to the second time points.

For details of determining the optimization function based on the multivariable reference values corresponding to the plurality of second time points and the multivariable series tags corresponding to the plurality of second time points, see the related description of S203.

The method further includes, at S506, determining values of respective parameters in the causal matrix with an objective of minimizing the optimization function.

The method further includes, at S507, determining, based on the values of the respective parameters in the causal matrix, a causal relationship between multiple variables in the multivariable time series. For details of S506 and S507, see the related description of S204 and S205 which are omitted here for brevity.

On the basis of the method embodiments described above, the embodiments of the present disclosure further provide a multivariable time series processing apparatus, which will be described below with reference to the drawings.

Fig. 7 illustrates a structure of a time series processing apparatus provided by embodiments of the present disclosure. The apparatus 700 includes: an obtaining unit 701, a predicting unit 702, and a determining unit 703.

The obtaining unit is configured for obtaining a time series set comprising a plurality of first time series segments, each of the plurality of first time series segments having a same length and being a multivariable time series.

The predicting unit is configured for inputting, for each of the first time series segments in the time series set, the first time series segment into a graph neural network, to predict a multivariable reference value corresponding to a first time point that is a next time point adjacent to a latest time point in the first time series segment.

The determining unit is configured for determining an optimization function based on multivariable reference values corresponding to a plurality of the first time points and multivariable series tags corresponding to the plurality of the first time points, the optimization function comprising a loss function and a causal matrix of the graph neural network.

The determining unit is further configured for determining values of respective parameters in the causal matrix, with an objective of minimizing the optimization function; and

The determining unit is still further configured for determining, based on the values of the respective parameters in the causal matrix, a causal relationship between multiple variables in the multivariable time series.

In a possible implementation, the determining unit 703 is specifically configured for: for a multivariable reference value corresponding to any of the first time points, obtaining a second time series segment, where the second time series segment includes the multivariable parameter value corresponding to the first time point and has a same length as the first time series segment; inputting the second time series segment into the graph neural network to predict a multivariable parameter value corresponding to a second time point that is a next time point adjacent to the first time point; and determining the optimization function based on multivariable reference values corresponding to a plurality of the second time points and multivariable series tags corresponding to the plurality of the second time points.

In a possible implementation, the determining unit 703 is specifically configured for determining existence of a time-lagged causality between the multiple variables if a parameter in the causal matrix has a non-zero value.

In a possible implementation, the predicting unit 702 is specifically configured for: inputting the first time series segment and a multivariable series tag corresponding to the first time point into an encoder of the graph neural network, to obtain noise features corresponding to respective variables and predicted features of respective variables of the first time point; and inputting the predicted features of the respective variables of the first time point and the noise features corresponding to the respective variables into a decoder of the graph neural network, to obtain the multivariable reference value corresponding to the first time point.

In a possible implementation, the determining unit 703 is further configured for: before determining, based on the values of the respective parameters in the causal matrix, the causal relationship between the multiple variables in the multivariable time series: determining a target parameter having a value less than a preset threshold in the causal matrix; and setting the value of the target parameter to 0.

In a possible implementation, the determining unit 701 is specifically configured for: obtaining an observation window and a sliding step; and moving the observation window with the sliding step over time series to obtain the plurality of the first time series segments.

In a possible implementation, a length of the observation window is no less than a maximum time lag value.

It is worth noting that the respective units in the embodiments can be specifically implemented with reference to the related description in the method embodiment as described above.

The division of the units according to the embodiments of the present disclosure is only a logical function division, which may be a further type of division when implemented in practice. The respective functional units in the embodiments of the present application may be integrated in a processing unit, or each unit may exist physically and separately, or two or more units may be integrated in one unit. For example, in the above-mentioned embodiments, the processing unit and the transmission unit may be the same unit, or may be different units. The integrated unit may be implemented in the form of hardware, or in the form of software functional units.

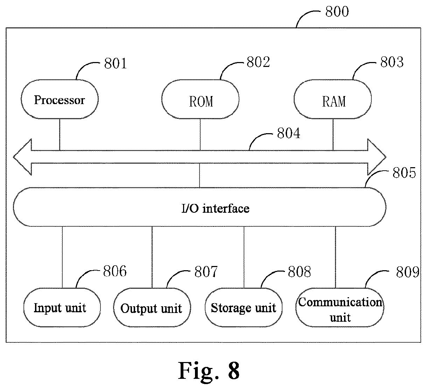

Fig. 8 illustrates a schematic diagram of a structure of an electronic device 800 adapted to implement embodiments of the present disclosure. The terminal device according to the embodiments of the present disclosure may include, but is not limited to, a mobile terminal such as a mobile phone, a laptop computer, a digital broadcast receiver, a Personal Digital Assistant (PDA), a tablet computer (PAD), a Portable Multimedia Player (PMP), an on-vehicle terminal (e.g. an on-vehicle navigation terminal) or the like, or a fixed terminal such as a digital TV, a desktop computer or the like. The electronic device as shown in Fig. 8 is only an example, without suggesting any limitation to the functions and the application range of the embodiments of the present disclosure.

As shown therein, the electronic device 800 may include a processor (e.g. a central processor, a graphics processor or the like) 801, which can execute various acts and processing based on programs stored in a Read-Only Memory (ROM) 802 or a program loaded from a storage unit 808 to a Random Access Memory (RAM) 803. RAM 803 stores therein various programs and data required for operations of the electronic device 800. The processor 801, the ROM 802 and the RAM 803 are connected to one another via a bus 804. An input/output (I/O) interface 805 is also connected to the bus 804.

Typically, the following units may be connected to the I/O interface 805: an input unit 806 including, for example, a touchscreen, a touch pad, a keyboard, a mouse, a camera, a microphone, an accelerometer, a gyroscope and the like; an output unit 807 including, for example, a Liquid Crystal Display (LCD), a loudspeaker, a vibrator and the like; a storage unit 808 including, for example, a tape, a hard drive and the like; and a communication unit 809. The communication unit 809 can allow wireless or wired communication of the electronic device 800 with other devices to exchange data. Although Fig. 8 shows the electronic device 800 including various units, it would be appreciated that not all of the units as shown are required to be implemented or provided. Alternatively, more or fewer units may be implemented or provided.

According to embodiments of the present disclosure, the processes described above with reference to the flowcharts may be implemented as computer software programs. For example, embodiments of the present disclosure include a computer program product comprising a computer program carried on a computer readable medium, the computer program containing program code for performing the methods as in the flowcharts. In those embodiments, the computer program may be downloaded and installed from a network via the communication unit 809, or may be installed from the storage unit 808, or may be installed from the ROM 802. The computer program, when executed by the processor 801, performs the above-described functions defined in the method according to the embodiments of the present disclosure.

The electronic device provided by the embodiments of the present disclosure and the method provided by the embodiments described above belong to the same invention conception. For the details omitted in this embodiment, see the embodiments described above. This embodiment has the same advantageous effect as the embodiment described above.

The embodiments of the present disclosure further provide a computer readable storage medium having computer programs stored thereon, where the computer programs, when executed by a processor, cause the processor to implement the method according to the embodiments as describe above.

It should be noted that the computer readable medium according to the present disclosure may be a computer readable signal medium or a computer readable storage medium or any combination of the two. The computer readable storage medium may be, for example, but not limited to, an electronic, magnetic, optical, electromagnetic, infrared, or semiconductor system, apparatus, or device, or any combination of the foregoing. More specific examples of the computer readable storage medium may include, but are not limited to: an electrical connection having one or more wires, a portable computer diskette, a hard disk, a Random Access Memory (RAM), a Random-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the foregoing. In the present disclosure, a computer readable storage medium may be any tangible medium that can contain, or store, a program for use by or in connection with an instruction execution system, apparatus, or device. In contrast, in the present disclosure, a computer readable signal medium may include a propagated data signal with computer readable program code embodied therein, either in baseband or as part of a carrier wave. Such propagated data signal may take many forms, including, but not limited to, an electro-magnetic signal, an optical signal, or any suitable combination thereof. A computer readable signal medium may also be any computer readable medium that is not a computer readable storage medium and that can communicate, propagate, or transmit a program for use by or in connection with an instruction execution system, apparatus, or device. Program code embodied on a computer readable medium may be transmitted using any appropriate medium, including but not limited to: electrical wires, optical cables, RF (radio frequency), etc., or any suitable combination of the foregoing.

In some embodiments, the client and the server may perform communication by using any known network protocol such as Hyper Text Transfer Protocol (HTTP) or any network protocol to be developed, and may connect with digital data in any form or carried in any medium (for example, a communication network). The communication network includes a Local Area Network (LAN), a Wide Area Network (WAN), an international network (for example, the internet), a peer-to-peer network (e.g. ad hoc peer-to-peer network), and any known network or network to be developed.

The computer-readable medium may be the one included in the electronic device, or may be provided separately, rather than assembled in the electronic device.

The computer-readable medium carries one or more programs which, when executed by the electronic device, cause the electronic device to perform steps of the method as described above.

Computer program codes for performing operations of the present disclosure may be written by using one or more program design language or any combination. The program design language includes, but is not limited to, object oriented program design language such as Java, Smalltalk and C++, and further includes conventional process-type program design language such as "C" or similar program design language. The program codes may be completely or partially executed on a user computer, performed as an independent software packet, partially executed on the user computer and partially executed on a remote computer, or completely executed on the remote computer or a server. In a case of involving the remote computer, the remote computer may connect to the user computer via any type of network such as a Local Area Network (LAN) and a Wide Area Network (WAN). Alternatively, the remote computer may connect to an external computer (such as achieving internet connection by services provided by the internet network service provider).

The flowchart and block diagrams in the drawings illustrate the architecture, functionality and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowcharts, and combinations of blocks in the block diagrams and/or flowcharts, can be implemented by special purpose hardware-based systems which perform the specified functions or acts, or combinations of special purpose hardware and computer instructions.

Related units for describing the embodiments of the present disclosure may be implemented in the form of software, or may be implemented in the form of hardware. In certain circumstances, the names of units/modules do not formulate limitation to the units *per se.*

The functions described above may be performed, at least in part, by one or more hardware logic components. For example, without limitation, exemplary types of hardware logic components that may be used include: Field Programmable Gate Arrays (FPGAs), Application Specific Integrated Circuits (ASICs), Application Specific Standard Products (ASSPs), Systems on Chip (SOCs), Complex Programmable Logic Devices (CPLDs), and the like.

In the context of this disclosure, a machine-readable medium may be a tangible medium that can contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of a computer-readable storage medium would include an electrical connection based on one or more wires, a portable computer diskette, a hard disk, an RAM, an ROM, an EPROM or flash memory, an optical fiber, a CD-ROM, an optical storage device, a magnetic storage device, or any suitable combination of the foregoing.

The embodiments in the present specification are described in a progressive way, where emphasis of the description of each embodiment is put on the differences from other embodiments, and for same or similar parts thereof, references can be mutually made to the other embodiments. Particularly, a system or apparatus embodiment is similar to a method embodiment and therefore described briefly. For related parts, references can be made to related descriptions in the method embodiment.

It should be understood that in the present disclosure, "at least one (item)" refers to one or more and "a plurality of" refers to two or more. The term "and/or" is used for describing an association relationship between associated objects, and represents that three relationships may exist. For example, "A and/or B" may represent the following three cases: only A exists, only B exists, and both A and B exist, where A and B may be singular or plural. The character "j" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, "a and b," "a and c," "b and c," or "a, b, and c," where a, b, and c may be singular or plural.

The relationship terms as used herein, for example, "first", "second", and the like, are only intended for distinguishing an entity or operation from a further entity or operation, but not necessarily require or imply that those entities or operations should have any of such actual relationships or orders. In addition, the terms "include", "comprise", or any other variant thereof are intended to cover a non-exclusive inclusion, such that a process, method, article, or device including a series of elements not only include those elements, but also cover other elements not listed explicitly, or further cover inherent elements of the process, method, article, or device. Unless specified otherwise, elements defined by the expression "including one... " do not exclude presence of additional identical elements in the process, method, article, or device including those elements.

The steps of the method or algorithm described with reference to the embodiments disclosed herein may be implemented directly with hardware or software modules executed by a processor, or a combination thereof. The software modules may be arranged in a Random Access Memory (RAM), a memory, a Read-Only Memory (ROM), an electrically programmable ROM, an electrically erasable programmable ROM, a register, a hard disk, a removable disk, a CD-ROM, or a storage medium in any other form known in the art.

The previous description of the disclosed embodiments is provided to enable those skilled in the art to make or use the present disclosure. Various modifications to these embodiments will be readily apparent to those skilled in the art, and the generic principles defined herein may be applied to other embodiments without departing from the spirit or scope of the present disclosure. Thus, the present disclosure is not intended to be limited to the embodiments shown herein but is to be accorded the widest scope consistent with the principles and novel features disclosed herein.

**Claims**

1. A method of multivariable time series processing, comprising:

   obtaining a time series set comprising a plurality of first time series segments, each of the plurality of first time series segments having a same length and being a multivariable time series;
   for each of the first time series segments in the time series set, inputting the first time series segment into a graph neural network to predict a multivariable reference value corresponding to a first time point that is a next time point adjacent to a latest time point in the first time series segment;

determining an optimization function based on multivariable reference values corresponding to a plurality of the first time points and multivariable series tags corresponding to the plurality of the first time points, the optimization function comprising a loss function and a causal matrix of the graph neural network;

determining values of respective parameters in the causal matrix with an objective of minimizing the optimization function; and

determining, based on the values of the respective parameters in the causal matrix, a causal relationship between multiple variables in the multivariable time series.

2. The method of claim 1, wherein determining the optimization function based on the multivariable reference values corresponding to the plurality of the first time points and the multivariable series tags corresponding to the plurality of the first time points comprises:

for a multivariable reference value corresponding to any of the first time points, obtaining a second time series segment, wherein the second time series segment comprises the multivariable parameter value corresponding to the first time point and has a same length as the first time series segment;

inputting the second time series segment into the graph neural network to predict a multivariable parameter value corresponding to a second time point that is a next time point adjacent to the first time point; and

determining the optimization function based on multivariable reference values corresponding to a plurality of the second time points and multivariable series tags corresponding to the plurality of the second time points.

3. The method of claim 1 or 2, wherein determining, based on the values of the respective parameters in the causal matrix, the causal relationship between the multiple variables in the multivariable time series comprises:

in a case where a parameter in the causal matrix has a non-zero value, determining existence of a time-lagged causality between the multiple variables.

4. The method of claim 1, wherein inputting the first time series segment into the graph neural network to predict the multivariable reference value corresponding to the first time point, comprises:

inputting the first time series segment and a multivariable series tag corresponding to the first time point into an encoder of the graph neural network, to obtain noise features corresponding to respective variables and predicted features of respective variables of the first time point; and

inputting the predicted features of the respective variables of the first time point and the noise features corresponding to the respective variables into a decoder of the graph neural network, to obtain the multivariable reference value corresponding to the first time point.

5. The method of claim 1, the method further comprising, before determining, based on the values of the respective parameters in the causal matrix, the causal relationship between the multiple variables in the multivariable time series:

determining a target parameter having a value less than a preset threshold in the causal matrix; and

setting the value of the target parameter to 0.

6. The method of claim 1, wherein obtaining the time series set comprises:

obtaining an observation window and a sliding step; and

moving the observation window with the sliding step over time series to obtain the plurality of the first time series segments.

7. The method of claim 6, wherein a length of the observation window is no less than a maximum time lag value.

8. A multivariable time series processing apparatus, comprising:

an obtaining unit for obtaining a time series set comprising a plurality of first time series segments, each of the plurality of first time series segments having a same length and being a multivariable time series;

an predicting unit for inputting, for each of the first time series segments in the time series set, the first time series segment into a graph neural network, to predict a multivariable reference value corresponding to a first time point that is a next time point adjacent to a latest time point in the first time series segment;

a determining unit for determining an optimization function based on multivariable reference values corresponding to a plurality of the first time points and multivariable series tags corresponding to the plurality of the first time points, the optimization function comprising a loss function and a causal matrix of the graph neural network; the determining unit further for determining values of respective parameters in the causal matrix, with an objective of minimizing the optimization function; and

the determining unit further for determining, based on the values of the respective parameters in the causal matrix, a causal relationship between multiple variables in the multivariable time series.

9. An electronic device, comprising:

a memory for storing instructions or a computer program; and
a processor for executing the instructions or the computer program in the memory to cause the electronic device to perform the method of any of claims 1-7.

10. A computer readable storage medium having instructions stored thereon which, when running on a device, cause the device to perform the method of any of claims 1-7.

(a)

(b)

(c)

Fig. 1

S201

Obtain a time series set comprising a plurality of first time series segments,
each of the plurality of first time series segments having a same length

S202

For each of the first time series segments in the time series set, input the first time series
segment into a graph neural network to predict a multivariable reference value corresponding to
a first time point that is a next time point adjacent to a latest time point in the first time series segment

S203

Determine an optimization function based on multivariable reference values corresponding to
a plurality of the first time points and multivariable series tags corresponding to the plurality
of the first time points, the optimization function comprising a loss function and a causal matrix

S204

Determine values of respective parameters in the causal matrix with
an objective of minimizing the optimization function

S205

Determine, based on the values of the respective parameters in the causal matrix,
a causal relationship between multiple variables in the multivariable time series

# Fig. 2

| Time series segment 1 | Time series segment 2 | Time series segment 3 | Time series segment 4 |

x1

x2

x3

......

......

t−n                                                                                                    t

Time series

## Fig. 3a

x1

x2

x3

......

......

t−n                                          Time series                                          t

## Fig. 3b

$s_p$

Encoder                                                    Decoder

## Fig. 4

S501

Obtain a time series set comprising a plurality of first time series segments, each of the plurality of first time series segments having a same length

S502

For each of the first time series segments in the time series set, input the first time series segment into a graph neural network to predict a multivariable reference value corresponding to a first time point that is a next time point adjacent to a latest time point in the first time series segment

S503

For a multivariable reference value corresponding to any of the first time points, obtain a second time series segment that comprises the multivariable parameter value corresponding to the first time point and has a same length as the first time series segment

S504

Input the second time series segment into the graph neural network to predict a multivariable parameter value corresponding to a second time point that is a next time point adjacent to the first time point

S505

Determine the optimization function based on multivariable reference values corresponding to a plurality of the second time points and multivariable series tags corresponding to the plurality of the second time points

S506

Determine values of respective parameters in the causal matrix with an objective of minimizing the optimization function

S507

Determine, based on the values of the respective parameters in the causal matrix, a causal relationship between multiple variables in the multivariable time series

Fig. 5

So

First time series segment

Second time series segment

So

## Fig. 6

Processing apparatus 700

Obtaining unit — 701

Predicting unit — 702

Determining unit — 703

## Fig. 7

Fig. 8

## INTERNATIONAL SEARCH REPORT

| | International application No. |
|---|---|
| | **PCT/CN2023/088339** |

**A. CLASSIFICATION OF SUBJECT MATTER**

G06T 19/00(2011.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 多变量, 时间序列, 图神经网络, 时刻, 优化函数, 损失函数, 因果, 真实值, 标签, 片段, 长度, multivariate, time series, graph neural network, time instant, optimization function, loss function, causal, true value, label, segment, length

**C. DOCUMENTS CONSIDERED TO BE RELEVANT**

| Category* | Citation of document, with indication, where appropriate, of the relevant passages | Relevant to claim No. |
|---|---|---|
| PX | CN 114925811 A (BEIJING VOLCANO ENGINE TECHNOLOGY CO., LTD.) 19 August 2022 (2022-08-19) claims 1-10 | 1-10 |
| A | CN 114169394 A (ZHEJIANG UNIVERSITY) 11 March 2022 (2022-03-11) description, paragraphs 0007-0031 | 1-10 |
| A | CN 112101480 A (XI'AN JIAOTONG UNIVERSITY) 18 December 2020 (2020-12-18) entire document | 1-10 |
| A | CN 114372504 A (YANSHAN UNIVERSITY) 19 April 2022 (2022-04-19) entire document | 1-10 |
| A | US 2019034497 A1 (NEC LABORATORIES AMERICA, INC.) 31 January 2019 (2019-01-31) entire document | 1-10 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 June 2023** | **23 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/088339**

| Patent document cited in search report | | | Publication date (day/month/year) | Patent family member(s) | | | Publication date (day/month/year) |
|---|---|---|---|---|---|---|---|
| CN | 114925811 | A | 19 August 2022 | None | | | |
| CN | 114169394 | A | 11 March 2022 | None | | | |
| CN | 112101480 | A | 18 December 2020 | None | | | |
| CN | 114372504 | A | 19 April 2022 | None | | | |
| US | 2019034497 | A1 | 31 January 2019 | WO | 2019022854 | A1 | 31 January 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210529330